# EUROPEAN PATENT SPECIFICATION

(11) **EP 3 077 446 B1**
(45) Date of publication and mention of the grant of the patent: **22.08.2018**
(21) Application number: 14805896.9
(22) Date of filing: 01.12.2014
(51) Int. Cl.: C08G 77/445, C08G 63/695, C09D 167/04, B05D 7/24, B63B 59/04, C09D 5/16, C09D 183/10

(54) **A COATING COMPOSITION**
BESCHICHTUNGSMITTEL
COMPOSITION DE REVETEMENT

(30) Priority: 05.12.2013 EP 13195942
(43) Date of publication of application: 12.10.2016
(73) Proprietor: PPG Coatings Europe B.V., 1047 BB Amsterdam (NL); Université de Bretagne Sud, 56321 Lorient Cedex (FR)
(72) Inventor: AZEMAR, Fabrice, F-40200 Mimizan (FR); LINOSSIER, Isabelle, F-56530 Queven (FR); REHEL, Karine, F-56270 Ploemeur (FR); FAY, Fabienne, F-56620 Pont Scorff (FR)
(74) Representative: Appleyard Lees IP LLP
(86) International application number: PCT/EP2014/076095
(87) International publication number: WO 2015/082397

(56) References cited:
- EP-A1- 0 473 812
- EP-A1- 2 404 950
- EP-A2- 1 476 509
- WO-A1-2013/000479
- WO-A2-2012/020992
- DE-A1- 4 011 942
- KRICHELDORF H R ET AL: "POLY(LACTONES). 9. POLYMERIZATION MECHANISM OF METAL ALKOXIDE INITIATED POLYMERIZATIONS OF LACTIDE AND VARIOUS LACTONES", MACROMOLECULES, AMERICAN CHEMICAL SOCIETY, US, vol. 21, no. 2, 1 February 1988 (1988-02-01), pages 286-293, XP000674388, ISSN: 0024-9297, DOI: 10.1021/MA00180A002
- Yu Jian: "Biodegradation-based polymer surface erosion and surface renewal for foul-release at low ship speeds.", Biofouling, vol. 19(supplement) April 2003 (2003-04), pages 83-90, England DOI: 10.1080/0892701031000063820 Retrieved from the Internet: URL:https://www.tandfonline.com/doi/pdf/10 .1080/0892701031000063820 [retrieved on 2017-03-17]

## Description

The present invention relates to a binder (i.e. a film forming binder), particularly to the use of a binder in a self polishing and/or antifouling coating composition suitable for marine applications. The present invention also relates to a self polishing and/or antifouling coating composition comprising a binder, which composition is suitable for marine applications.

Coating compositions formulated to prevent the adhesion of micro-organisms, plants and animals to surfaces are well known in the art. An area where such coatings are of particular interest is in marine applications, where a surface is exposed to water which contains organisms that will adhere to the surface, thus fouling the surface. For example, if the surface is the hull of a ship, the increase in frictional resistance caused by the adhesion of organisms such as barnacles to the surface leads to a drastic reduction in the fuel efficiency of the ship.

Traditionally, there have been three ways that a coating composition can be designed to reduce and/or prevent the adhesion and build up of fouling agents on a surface. Firstly, the coating composition can contain a biocide agent (such as an antifouling biocide agent, also known as an antifoulant agent) which serves to physiologically disrupt or kill the marine organism. This can happen either prior to, during or after adhesion of the organism to the surface such that the organism falls away from the surface. This mode of adhesion reduction/prevention is often referred to as "antifouling" and such coatings often referred to as antifouling coatings.

Secondly, the coating composition may be designed to slowly degrade over time, such that organisms adhered to the surface will gradually fall off the surface with the degradation of the coating. The degradation is often caused by a slow hydrolysation of the coating (usually a binder within the coating). This mode of adhesion reduction/prevention is often referred to as self polishing and such coatings are often referred to as self polishing coatings or ablative coatings. These coatings often work by having a binder that hydrolyses in marine conditions which results in the controlled degradation of the coating and causes adhered marine organisms to fall away from the coated surface.

Finally, coatings have been developed which have a very smooth, slippery, low-friction surface onto which fouling organisms have difficulty attaching. Any which do attach, often do so only weakly and can usually be easily removed, especially under marine conditions with water washing over the coated surface. Such coatings are often referred to as fouling release coatings.
In order to obtain an effective and efficient removal of organisms from surfaces it is now common practice to produce coating compositions that both contain a biocide agent (such as an antifouling biocide agent/antifoulant agent) and which slowly degrade over time. Such dual functional coatings are often referred to as self polishing antifouling coatings.

Document WO 2013/000479 A1 discloses using polysiloxane-polycaprolactone block copolymers in the manufacture of marine anti-fouling coatings.

One aspect of self polishing and/or antifouling coatings that can greatly affect the polishing rates or antifouling properties is the binder.
The present invention provides a binder for marine self polishing and/or antifouling coating compositions.
According to a first aspect of the present invention, there is provided a self polishing and/or antifouling coating composition comprising one or more biocides and a binder. The binder comprises a copolymer comprising (i) units of A and (ii) units of B and/or C: 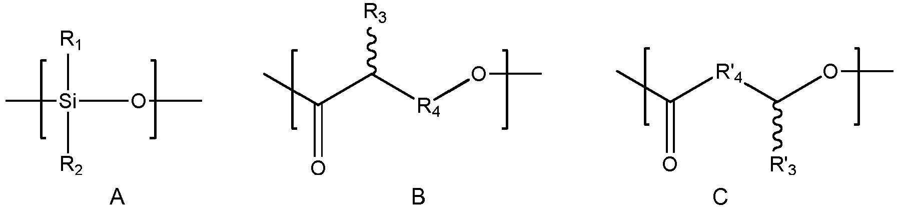 wherein R₁ and R₂ are each independently H, a C₁-C₆ alkyl group or phenyl, R₃ is H, a C₁-C₆ alkyl group or phenyl, R₄ is optional and, when present, is a C₁₋₃ alkylene group, R'₃ is H, a C₁-C₆ alkyl group or phenyl, and R'₄ is optional and, when present, is a C₁₋₃ alkylene group and wherein the copolymer has a weight ratio of units of B to units of A of from 67:33 to 94:6, preferably of from 80:20 to 92:8 or has a weight ratio of units of C to units of A of from 67:33 to 94:6, preferably of from 80:20 to 92:8.
In one embodiment according to a first aspect of the present invention, the binder comprises a copolymer comprising units of each of A and B: 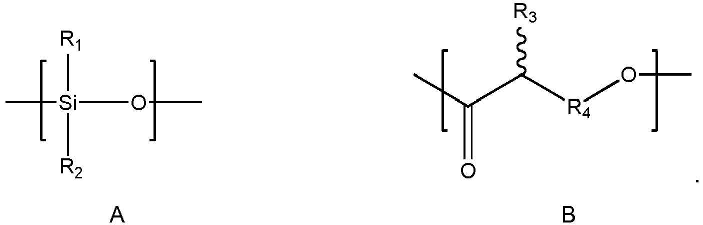 wherein R₁ and R₂ are each independently H, a C₁-C₆ alkyl group or phenyl, R₃ is H, a C₁-C₆ alkyl group or phenyl, and R₄ is optional and, when present, is a C₁₋₃alkylene group.

In one embodiment, according to a first aspect of the present invention, the binder comprises a copolymer comprising units of each of A and C: 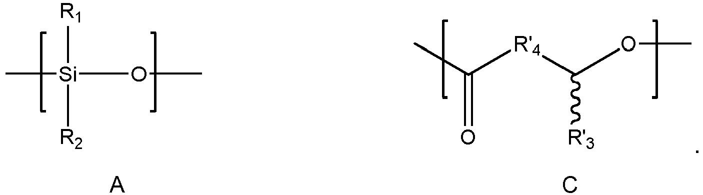 wherein R₁ and R₂ are each independently H, a C₁-C₆ alkyl group or phenyl, R'₃ is H, a C₁-C₆ alkyl group or phenyl, and R'₄ is optional and, when present, is a C₁₋₃alkylene group.

In one embodiment according to a first aspect of the present invention, the binder comprises a copolymer comprising units of each of A, B and C: 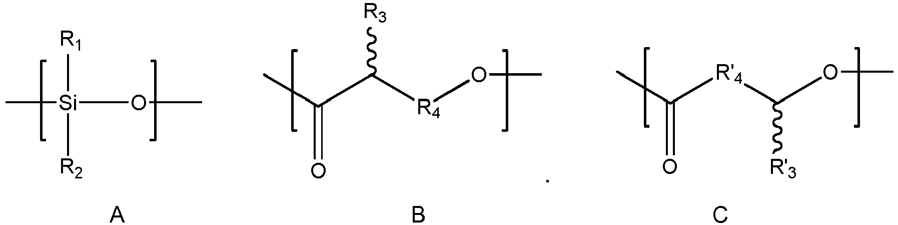 wherein R₁ and R₂ are each independently H, a C₁-C₆ alkyl group or phenyl, R₃ is H, a C₁-C₆ alkyl group or phenyl, R₄ is optional and, when present, is a C₁₋₃ alkylene group, R'₃ is H, a C₁-C₆ alkyl group or phenyl, and R'₄ is optional and, when present, is a C₁₋₃alkylene group.

The units A can be considered as siloxane units.

The units B and C can each be considered as ester units.

The copolymer may comprise (i) single units A and (ii) single units B and/or C linked so as to provide an alternating copolymer, a periodic copolymer or a random copolymer. For example, the copolymer may comprise single units A and B linked so as to provide an alternating copolymer (i.e. of the structure -[-A-B-A-B-]-), a periodic copolymer or a random copolymer.

In one embodiment, the copolymer comprises (i) blocks of the units A and (ii) blocks of the units B and/or C so as to provide a block copolymer.

In one embodiment, the copolymer comprises blocks of the units A and/or blocks of the units B, for example blocks of the units A and blocks of the units B, so as to provide a block copolymer. For example, in the block copolymer the blocks of the units A and the blocks of the units B may be dimers, oligomers or polymers, for example dimers, oligomers or polymers A' and B' represented as follows: 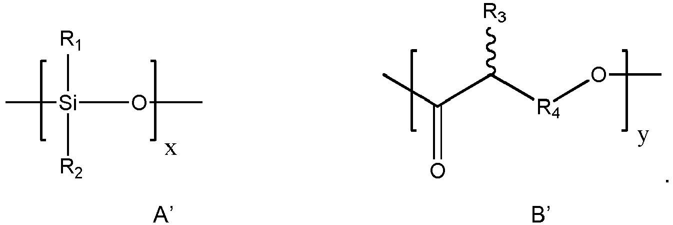 wherein x and y are each greater than 1. For example, x and y, which may be the same or different, may each be greater than 10. In one embodiment, x and y each independently represent an integer of from 10 to 500.

In one embodiment, the copolymer comprises blocks of the units A and/or blocks of the units C, for example blocks of the units A and blocks of the units C, so as to provide a block copolymer. For example, in the block copolymer the blocks of the units A and the blocks of the units C may be dimers, oligomers or polymers, for example dimers, oligomers or polymers A' and C' represented as follows: 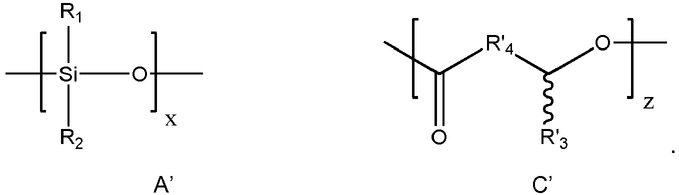 wherein x and z are each greater than 1. For example, x and z, which may be the same or different, may each be greater than 10. In one embodiment, x and z each independently represent an integer of from 10 to 500.

The blocks A' can be considered as poly(siloxane) units.

The blocks B' and the blocks C' can be considered as polyester units.

The copolymer may comprise any suitable combination of units A, units B, units C, blocks A' blocks B' and blocks C'.

In one embodiment, the copolymer may comprise any suitable combination of units A, units B, blocks A' and blocks B'.

References herein to binder(s) and/or copolymer(s) comprising (i) units of A and (ii) units of B and/or C of course include those wherein the units A and B and/or C may be included as blocks of A and B and/or C (i.e. blocks A' and/or B' and/or C'). References herein to binder(s) and/or copolymer(s) comprising units of A and B of course include those wherein the units A and/or B may be included as blocks of A and/or B (i.e. blocks A' and/or B'). In other words, copolymers comprising units A and B may comprise these units as blocks of A (i.e. A') and/or as blocks of units B (i.e. B').

In one embodiment, the copolymer is a tri-block copolymer, for example a tri-block copolymer comprising a central block A' with blocks B' either side.

The units A and B and/or C (and the blocks A' and B' and/or C') can be connected to each other using any suitable chemical process, as would be known to persons skilled in the art, so as to form the desired copolymer.

In one embodiment, the units A and B (and the blocks A' and B') can be connected to each other using any suitable chemical process, as would be known to persons skilled in the art, so as to form the desired copolymer. The units A and B (and the blocks A' and B') may be directly bonded to each other so as to form the desired copolymer. The units A and B (and the blocks A' and B') may be attached to each other by means of any suitable chemical linker group. Thus, the copolymer may have the following structure, for example where single units A and B are linked: 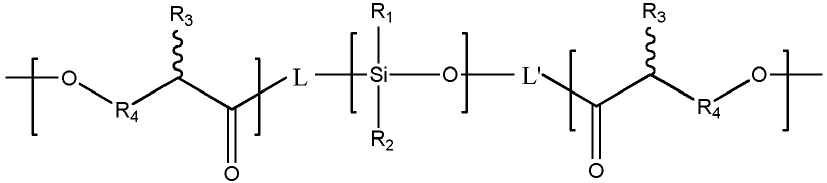 or the copolymer may have the following structure, for example wherein the copolymer is a block copolymer: 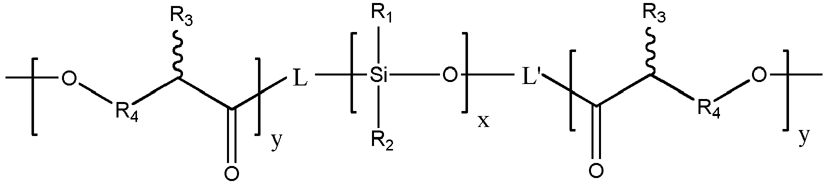 or the copolymer may have the following structure, for example wherein units A are copolymerised with blocks B': 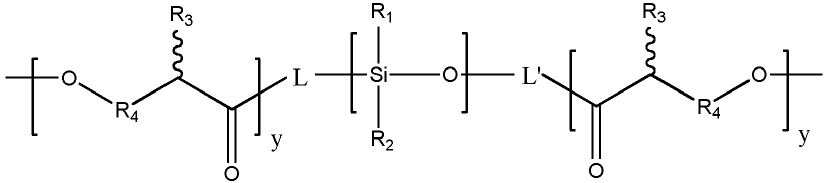 wherein R₁, R₂, R₃, R₄, x and y are as defined herein and wherein L and L' each independently represent a direct bond or a linker group. Each occurrence of the integer y may be the same or different.

For example, when L and/or L' is a linker group, L and/or L' may each independently represent a group -O-(CR₅R₆)ₙ- or -O-(CR₇R₈)ₘ-Si(R₉R₁₀)- wherein R₅ and R₆ are each independently H or a C₁-C₆ alkyl group, n is 1 to 5, R₇ and R₈ are each independently H or a C₁-C₆ alkyl group, m is 1 to 5 and R₉ and R₁₀ are each independently a C₁-C₆ alkyl group. The linker groups L and L' may be the same or different. For example, a suitable linker group L and/or L' may be -OCH₂-. Another suitable linker group may be -O-CH₂-Si(R₉R₁₀)-wherein R₉ and R₁₀ are each independently H or a C₁-C₆ alkyl group, such as -O-CH₂-Si(CH₃)₂-. Thus, the copolymer may typically comprise linker groups L and L' in addition to the units A and B and/or C (including blocks A' and B' and/or C'). In one embodiment, the copolymer comprises linker groups L and L' in addition to the units A and B (including blocks A' and B').

The copolymers can be terminated by any suitable end group, as would be appreciated by persons skilled in the art. The nature of the end groups depends on the method by which the copolymer is formed and the reagents used. Thus, the copolymer may have the following structure, for example where it is a tri-block copolymer: 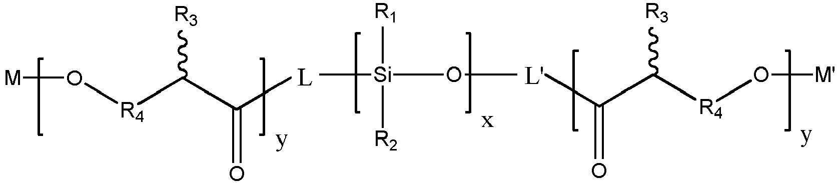 wherein R₁, R₂, R₃, R₄, x, y, L and L' are as defined herein and wherein M and M' each independently represent a suitable end group. As discussed above, each occurrence of the integer y may be the same or different.

The end groups M and M' may be the same or different. For example, a suitable end group M and/or M' is H. Thus, the copolymer may typically comprise end groups M and M' in addition to the units A and B and/or C (including blocks A' and B' and/or C'), such as the units A and B (including blocks A' and B') and the linker groups L and L'.

The units A and B (and similarly the blocks A' and B'), the linker groups L and L' described herein and the end groups M and M' described herein are represented above with the chemical groups shown in one direction, but could of course be transposed in the copolymers, for example such that the units A and B (and similarly the blocks A' and B') may also be represented as: 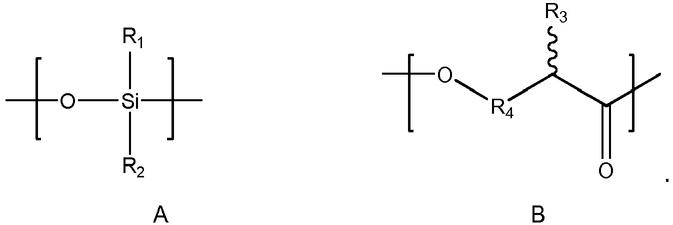 wherein R₁, R₂, R₃ and R₄ are as defined herein.

Similarly, the units C may also be represented as: 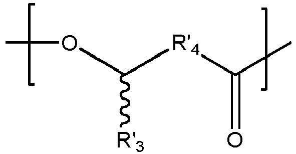 wherein R'₃ and R'₄ are as defined herein.

Similarly, the linker group L may be represented as -(CR₅R₆)ₙ-O- wherein R₅, R₆ and n are as defined herein or as -Si(R₉R₁₀)-(CR₇R₈)ₘ-O- wherein R₇, R₈, R₉, R₁₀, n and m are as defined herein.

A binder which is a tri-block copolymer, may have the following structure: 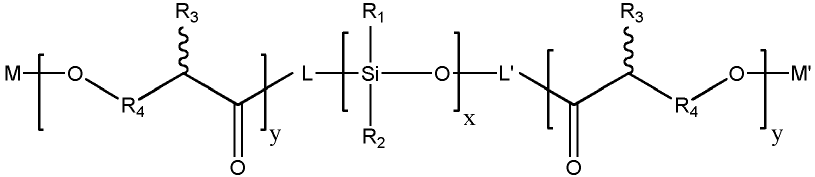 wherein R₁, R₂, R₃, R₄, x and y are as defined herein and wherein L represents a direct bond or a linker group as defined herein. As discussed above, each occurrence of the integer y may be the same or different.

For example, where L is -O-(CR₅R₆)ₙ, the tri-block copolymer may have the structure: 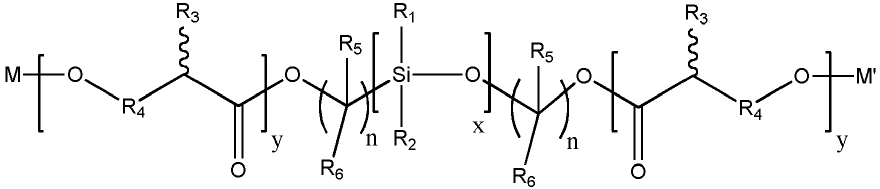 wherein R₁, R₂, R₃, R₄, R₅, R₆, M, M', x, y and n are as defined herein. As discussed above, each occurrence of the integer y may be the same or different.

For example, where L is -O-(CR₅R₆)ₙ and L' is -O-(CR₇R₈)ₘ-Si(R₉R₁₀)-, the tri-block copolymer may have the structure: 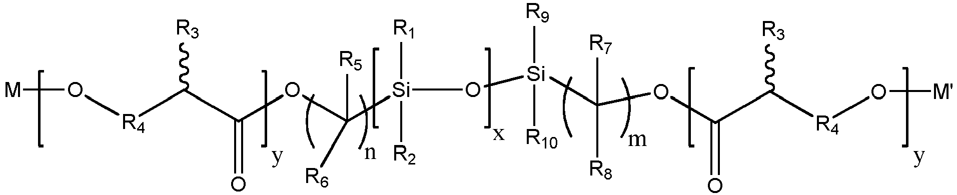 wherein R₁, R₂, R₃, R₄, R₅, R₆, R₇, R₈, R₉, R₁₀, M, M', x, y, n and m are as defined herein. As discussed above, each occurrence of the integer y may be the same or different.

For example, where L is -O-(CR₅R₆)ₙ, L' is -O-(CR₇R₈)ₘ-Si(R₉R₁₀)-, M is H and M' is H, the tri-block copolymer may have the structure: 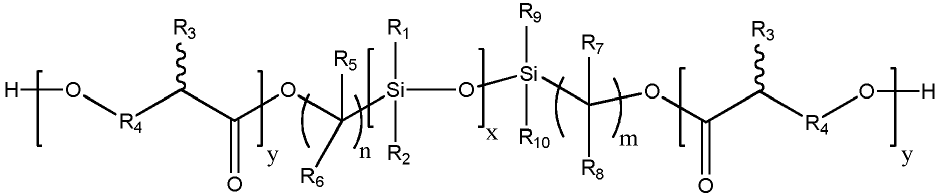 wherein R₁, R₂, R₃, R₄, R₅, R₆, R₇, R₈, R₉, R₁₀, n, m, x and y are as defined herein. As discussed above, each occurrence of the integer y may be the same or different.

In one embodiment, in the units A and blocks A', the groups R₁ and R₂ are each independently methyl or phenyl. In one embodiment, R₁ and R₂ both represent methyl. When R₁ and R₂ both represent methyl, the unit A is a dimethylsiloxane group (i.e. -[Si(CH₃)₂-O]-) and the block A' is a polydimethylsiloxane group (i.e. -[Si(CH₃)₂-O]ₓ-, where x is as defined herein).

In one embodiment, in the units B and blocks B', the group R₃ represents H or a C₁₋₆ alkyl group, for example H or a C₁₋₃ alkyl group, such as H or methyl.

In one embodiment, the group R₃ represents methyl.

In one embodiment, in the units B and blocks B', the group R₄ represents C₁₋₃ alkylene.

In one embodiment, in the units B and blocks B', the group R₄ is not present. As the skilled person would appreciate, when the group R₄ is not present, R₄ represents a direct bond.

In one embodiment, in the units B and blocks B', the group R₃ represents H or a C₁₋₆ alkyl group, for example H or a C₁₋₃ alkyl group, such as H or methyl, and the group R₄ is not present. Thus, in one embodiment, units B and blocks B' may be represented as one or more of: 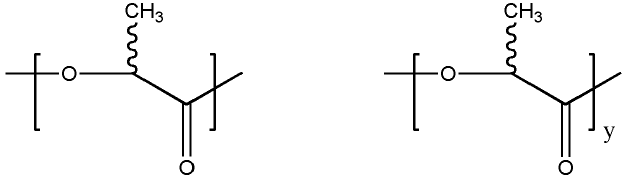 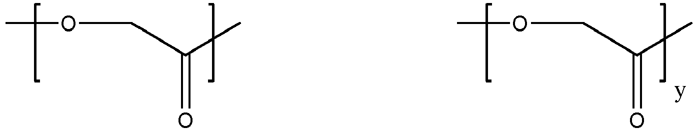 wherein y is as defined herein. These groups B and B' are derivable from hydroxycarboxylic acids and poly(hydroxycarboxylic acids), such as poly(glycolic acid), poly(lactic acid), poly((l)lactic acid), poly(d)lactic acid) and poly((d, l)lactic acid), and combinations thereof.

When the group R₃ represents methyl and the group R₄ is not present, then the unit B is a lactic acid residue and the block B' is poly(lactide). The lactic acid residue may be L-lactic acid residue and/or D-lactic acid residue and the poly(lactide) may be poly(L-lactide) and/or poly(D-lactide). In one embodiment, the molar ratio of the L-lactic acid residue and the D-lactic acid residue is in the range of from 1 to 5. When the block B' represents poly(lactide), in one embodiment, it is poly(D,L-lactide).

When the group R₃ represents H and the group R₄ is not present, then the unit B is a glycolic acid residue and the block B' is poly(glycolide).

In one embodiment, in the units C and blocks C', the group R'₃ represents H or a C₁₋₆ alkyl group, for example H or a C₁₋₃ alkyl group, such as H or methyl.

In one embodiment, the group R'₃ represents methyl.

In one embodiment, in the units C and blocks C', the group R'₄ represents a C₁₋₃ alkylene group.

In one embodiment, in the units C and blocks C', the group R'₄ is not present.

The copolymer has a weight ratio of units of B to units of A of from 67:33 to 94:6, such as from 80:20 to 92:8, or has a weight ratio of units of C to units of A of from 67:33 to 94:6, such as from 80:20 to 92:8.

The copolymer may have a Mw in the range of 2000 to 100000 Dalton, for example of 5000 to 40000 Dalton.

The number-average molecular weight may be measured by any suitable method. Techniques to measure the number-average molecular weight will be well known to a person skilled in the art. Suitably, the Mn may be determined by gel permeation chromatography using a polystyrene standard according to ASTM D6579-11 ("Standard Practice for Molecular Weight Averages and Molecular Weight Distribution of Hydrocarbon, Rosin and Terpene Resins by Size Exclusion Chromatography". UV detector; 254nm, solvent: unstabilised THF, retention time marker: toluene, sample concentration: 2mg/ml).

Techniques to measure the weight-average molecular weight will be well known to a person skilled in the art. Suitably, the Mw may be determined by gel permeation chromatography using a polystyrene standard.

In one embodiment, the binder is used in such an amount that the proportion thereof in the solid contents of the coating composition is from 5 to 35 wt%, of a binder composed of for example from 35 to 5 wt% of A units (such as from 15 to 5 wt% of A units) and from 65 to 95 wt% of B units (such as from 85 to 95 wt% of B units).

The present inventors have surprisingly found that the binder as discussed herein is very flexible. This is unexpected because polymers such as poly(lactic acid) are known to be rigid and have limited uses. Coating compositions comprising binders according to the first aspect of the present invention are also flexible and may result in little or no cracking of the coating when applied to substrates, thereby providing long lasting and effective coatings. The use of units of the type B and/or C (and blocks B' and/or C') in the binders of the coating compositions of the present invention may also be advantageous because the units/binders are typically biodegradable and therefore good for the environment.

Unless otherwise stated, the term "binder" as used herein means a substance (for example a copolymer) that will form a film on a substrate. In other words, the binder may be a film forming copolymer that can be used as a film forming component, for example in a coating composition (such as an antifouling paint).

Unless otherwise stated, the term "alkyl" as used herein includes both straight chain and branched chain alkyl groups, such as propyl, isopropyl and tert-butyl. However, references to individual alkyl groups such as "propyl" are specific for the straight-chain version only and references to individual branched-chain alkyl groups such as "isopropyl" are specific for the branched-chain version only. A C₁-C₆ alkyl group has from one to six carbon atoms including methyl, ethyl, n-propyl, isopropyl, tert-butyl, n-pentyl, n-hexyl and the like. References to a C₁-C₃ alkyl group will be understood accordingly to mean a straight or branched chain alkyl moiety having from one to three carbon atoms.

The term "alkylene", as used herein, relates to a bivalent radical alkyl group as defined above. For example, an alkyl group such as methyl which would be represented as -CH₃, becomes methylene, -CH₂-, when represented as an alkylene. Other alkylene groups should be understood accordingly.

The binder may comprise a copolymer consisting essentially of units of each of A and B (wherein reference to units A and B includes blocks A' and B').

The binder may comprise a copolymer consisting essentially of units of each of A and B (wherein reference to units A and B includes blocks A' and B') and of linker groups L and/or L'.

The binder may comprise a copolymer consisting essentially of units of each of A and B (wherein reference to units A and B includes blocks A' and B'), of linker groups L and/or L' and of end groups M and/or M'.

The binder may comprise a copolymer consisting essentially of units of each of A and B (wherein reference to units A and B includes blocks A' and B') and of end groups M and/or M'.

The binder may comprise a copolymer consisting essentially of units of each of A and C (wherein reference to units A and C includes blocks A' and C').

The binder may comprise a copolymer consisting essentially of units of each of A and C (wherein reference to units A and C includes blocks A' and C') and of linker groups L and/or L'.

The binder may comprise a copolymer consisting essentially of units of each of A and C (wherein reference to units A and C includes blocks A' and C'), of linker groups L and/or L' and of end groups M and/or M'.

The binder may comprise a copolymer consisting essentially of units of each of A and C (wherein reference to units A and C includes blocks A' and C') and of end groups M and/or M'.

The binder may comprise a copolymer consisting essentially of units of each of A and B and/or C (wherein reference to units A, B and C includes blocks A', B' and C').

The binder may comprise a copolymer consisting essentially of units of each of A and B and/or C (wherein reference to units A, B and C includes blocks A', B' and C') and of linker groups L and/or L'.

The binder may comprise a copolymer consisting essentially of units of each of A and B and/or C (wherein reference to units A, B and C includes blocks A', B' and C'), of linker groups L and/or L' and of end groups M and/or M'.

The binder may comprise a copolymer consisting essentially of units of each of A and B and/or C (wherein reference to units A, B and C includes blocks A', B' and C') and of end groups M and/or M'.

The binder may comprise a copolymer consisting essentially of units of each of A, B and C (wherein reference to units A, B and C includes blocks A', B' and C').

The binder may comprise a copolymer consisting essentially of units of each of A, B and C (wherein reference to units A, B and C includes blocks A', B' and C') and of linker groups L and/or L'.

The binder may comprise a copolymer consisting essentially of units of each of A, B or C (wherein reference to units A, B and C includes blocks A', B' and C'), of linker groups L and/or L' and of end groups M and/or M'.

The binder may comprise a copolymer consisting essentially of units of each of A, B and C (wherein reference to units A, B and C includes blocks A', B' and C') and of end groups M and/or M'.

There is also provided a method of forming a binder, particularly suitable for a self-polishing and/or antifouling coating composition, the method comprising copolymerising sources of (i) units of A and (ii) units of B and/or C. The units A and B and/or C may of course be individual units A and B and/or C and/or blocks A' and B' and/or C'.

A method of forming a binder, particularly suitable for a self-polishing and/or antifouling coating composition, may comprise copolymerising sources of units of A and B. The units A and B may of course be individual units A and B and/or blocks A' and B'.

The method may comprise the copolymerisation of a suitable cyclic monomer such as glycolide or lactide with a suitable polysiloxane (such as a bishydroxy terminated polydialkylsiloxane, for example bishydroxyterminated polydimethylsiloxane) in the presence of a suitable ring-opening polymerisation catalyst. Such copolymerisation reactions typically require heating under an inert atmosphere, such as an argon or nitrogen atmosphere. The copolymer is typically then isolated once the copolymerisation reaction is complete.

Another method may comprise the copolymerisation of a suitable aliphatic hydroxycarboxylic acid such as lactic acid or glycolic acid, or of a suitable polymer such as polylactide or polyglycolide, and a suitable polysiloxane (such as a bishydroxy terminated polydialkylsiloxane, for example bishydroxyterminated polydimethylsiloxane) in the presence of a suitable polymerisation catalyst. Such reactions are typically conducted at room temperature.

As the skilled person would appreciate, suitable click chemistry may be used to prepare the desired copolymers using suitable reagents.

For example, when L is a group -O-(CR₅R₆)ₙ the method may comprise copolymerising a poly(hydroxycarboxylic acid) and a bis(hydroxyalkyl) terminated polysiloxane.

The copolymerisation reaction may be conducted using any suitable method. For example, to prepare a copolymer having a unit B wherein the group R₃ represents methyl and the group R₄ is not present, the copolymerisation reaction may be conducted by a ring opening polymerisation reaction of a bis(hydroxyalkyl)terminated poly(dialkylsiloxane) and 3,6-dimethyl-1,4-dioxane-2,5-dione using a suitable catalyst. A suitable catalyst is a tin catalyst, such as tin octanoate (also referred to as di(2-ethylhexanoate)). Typically, the reaction mixture must be heated to a temperature in the range 70 to 160°C.

For example, the copolymerisation reaction may be conducted by a ring opening polymerisation reaction of bis(hydroxyalkyl)terminated poly(dimethylsiloxane) and 3,6-dimethyl-1,4-dioxane-2,5-dione using a suitable catalyst, such as tin octanoate, to provide a tri-block copolymer: 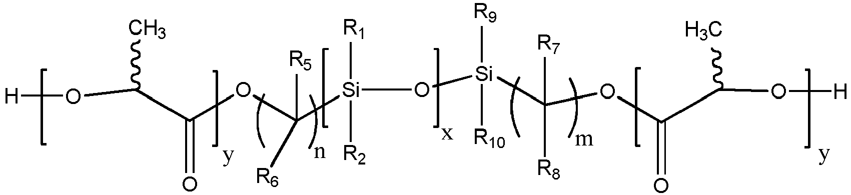 wherein R₅, R₆, R₇, R₈, R₉, R₁₀, n, m, x and y are as defined herein. As discussed above, each occurrence of the integer y may be the same or different.

The binder as discussed herein may be included in the coating composition of the invention either as the only binder content or in combination with other co-binders as mentioned below.

The coating composition typically is a marine coating composition.

In one embodiment, the coating composition is a self polishing antifouling coating composition, such as a self polishing antifouling marine coating composition.

In one embodiment, the binder is used in such an amount that the proportion thereof in the solid contents of the coating composition is 5 to 40 wt%, for example 15 to 30 wt%, such as 17 to 25 wt%.

Typically, the coating composition comprises one or more components in addition to the binder as discussed herein. A person skilled in the art would readily understand what components are typically included in a coating composition, especially a marine coating composition such as a self polishing antifouling coating composition.

The coating composition comprises one or more biocides, for example one or more antifoulant agents. Examples of suitable antifoulant agents include any of one or more conventionally known antifoulant agents. The known antifoulant agents are roughly divided into inorganic compounds, metal-containing organic compounds, and metal-free organic compounds.

Examples of the inorganic compounds include copper compounds (for example copper sulphate, copper powder, cuprous thiocyanate, copper carbonate, copper chloride, and the traditionally preferred cuprous oxide), zinc sulphate, zinc oxide, and copper nickel alloys.

Examples of the metal-containing organic compounds include organo-copper compounds, and organo-zinc compounds. Also usable are manganese ethylene bis dithiocarbamate (maneb), propineb, and the like. Examples of the organo-copper compounds include copper nonylphenol-sulphonate, copper bis(ethylenediamine) bis(dodecylbenzene sulphonate), copper acetate, copper naphthenate, copper pyrithione and copper bis(pentachlorophenolate). Examples of the organo-zinc compounds include zinc acetate, zinc carbamate, bis(dimethylcarbamoyl) zinc ethylene-bis(dithiocarbamate), zinc dimethyl dithiocarbamate, zinc pyrithione, and zinc ethylene-bis(dithiocarbamate). As an example of mixed metal-containing organic compound, one can cite (polymeric) manganese ethylene bis dithiocarbamate complexed with zinc salt (mancozeb).

Examples of the metal-free organic compounds include N-trihalomethylthiophthalimides, trihalomethylthiosulphamides, dithiocarbamic acids, N-arylmaleimides, 3-(substituted amino)-1,3 thiazolidine-2,4-diones, dithiocyano compounds, triazine compounds, oxathiazines and others.

Examples of the N-trihalomethylthiophthalimides include N-trichloromethylthiophthalimide and N-fluorodichloromethylthiophthalimide.

Examples of the dithiocarbamic acids include bis(dimethylthiocarbamoyl) disulphide, ammonium N-methyldithiocarbamate and ammonium ethylene-bis(dithiocarbamate).

Examples of trihalomethylthiosulphamides include N-(dichlorofluoromethylthio)-N',N'-dimethyl-N-phenylsulphamide and N-(dichlorofluoromethylthio)-N',N'-dimethyl-N-(4-methylphenyl)sulphamide.

Examples of the N-arylmaleimides include N-(2,4,6-trichlorophenyl)maleimide, N-4 tolylmaleimide, N-3 chlorophenylmaleimide, N-(4-n-butylphenyl)maleimide, N-(anilinophenyl)maleimide, and N-(2,3-xylyl)maleimide.

Examples of the 3-(substituted amino)-1,3-thiazolidine-2,4-diones include 2-(thiocyanomethylthio)-benzothiazole, 3-benzylideneamino-1, 3-thiazolidine-2,4-dione, 3-(4-methylbenzylideneamino)-1,3-thiazolidine-2,4-dione, 3-(2-hydroxybenzylideneamino)-1,3-thiazolidine-2,4-dione,3-(4-dimethylaminobenzylideamino)-1,3-thiazolidine-2,4-dione, and 3-(2,4-dichlorobenzylideneamino)-1,3-thiazolidine-2,4-dione.

Examples of the dithiocyano compounds include dithiocyanomethane, dithiocyanoethane, and 2,5-dithiocyanothiophene.

Examples of the triazine compounds include 2-methylthio-4-butylamino-6-cyclopropylamino-s-triazine.

Examples of oxathiazines include 1,4,2-oxathiazines and their mono- and di-oxides such as disclosed in WO 98/05719: mono- and di-oxides of 1,4,2-oxathiazines with a substituent in the 3 position representing (a) phenyl; phenyl substituted with 1 to 3 substituents which are independently hydroxyl, halo, C₁-C₁₂ alkyl, C₅-C₆ cycloalkyl, trihalomethyl, phenyl, C₁-C₅ alkoxy, C₁-C₅ alkylthio, tetrahydropyranyloxy, phenoxy, C₁-C₄ alkyl carbonyl, phenyl carbonyl, C₁-C₄ alkylsulfinyl, carboxy or its alkali metal salt, C₁-C₄ alkoxycarbonyl, C₁-C₄ alkylaminocarbonyl, phenylaminocarbonyl, tolylaminocarbonyl, morpholinocarbonyl, amino, nitro, cyano, dioxolanyl or C₁-C₄ alkyloxyiminomethyl; naphthyl; pyridinyl; thienyl; furanyl; or thienyl or furanyl substituted with one to three substituents which are independently C₁-C₄ alkyl, C₁-C₄ alkoxy, C₁-C₄ alkylthio, halo, cyano, formyl, acetyl, benzoyl, nitro, C₁-C₄ alkoxycarbonyl, phenyl, phenylaminocarbonyl or C₁-C₄ alkyloxyiminomethyl; or (b) a substituent of generic formula : 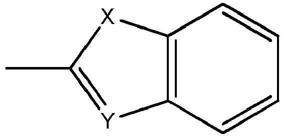 wherein X is oxygen or sulphur; Y is nitrogen, CH or C(C₁-C₄ alkoxy); and the C6 ring may have one C₁-C₄ alkyl substituent; a second substituent which is C₁-C₄ alkyl or benzyl being optionally present in position 5 or 6.

Other examples of the metal-free organic compounds include 2,4,5,6-tetrachloroisophthalonitrile, N,N-dimethyl-dichlorophenylurea, 4,5-dichloro-2-n-octyl-4-isothiazoline-3-one, N,N-dimethyl-N'-phenyl-(N-fluorodichloromethylthio)-sulfamide, tetramethylthiuramdisulphide, 3-iodo-2-propinylbutyl carbamate, 2-(methoxycarbonylamino)benzimidazole, 2,3,5,6-tetrachloro-4-(methylsulphonyl)pyridine, diiodomethyl-p-tolyl sulphone, phenyl(bispyridine)bismuth dichloride, 2-(4-thiazolyl)benzimidazole, dihydroabietyl amine, N-methylol formamide and pyridine triphenylborane.

Among the fouling organisms, barnacles have proved to be the most troublesome, because they resist to most biocides. Accordingly, the coating composition may also include at least an effective amount of antifoulant agent which includes at least one specific barnaclecide, such as cuprous oxide or thiocyanate. Another suitable barnaclecide is ECONEA (2-(p-chlorophenyl)-3-cyano-4-bromo-5-trifluoromethyl pyrrole) disclosed in EP-A-831134 and commercially available from Janssen Pharmaceutica. EP-A-831134 discloses the use of from 0.5 to 9.9 wt%, based on the total weight of the dry mass of the composition, of at least one 2-trihalogenomethyl-3-halogeno-4-cyano pyrrole derivative substituted in position 5 and optionally in position 1, the halogens in positions 2 and 3 being independently fluorine, chlorine or bromine, the substituent in position 5 being C₁-C₈ alkyl, C₁-C₈ monohalogenoalkyl, C₅-C₆ cycloalkyl, C₅-C₆ monohalogenocycloalkyl, benzyl, phenyl, mono- or di-halogenobenzyl, mono- or di-halogenophenyl, mono- or di-C₁-C₄-alkyl benzyl, mono- or di-C₁-C₄-alkyl phenyl, monohalogeno mono-C₁-C₄-alkyl benzyl or monohalogeno mono-C₁-C₄-alkyl phenyl, any halogen on the substituent in position 5 being chlorine or bromine, the optional substituent in position 1 being C₁-C₄ alkyl or C₁-C₄ alkoxy C₁-C₄ alkyl.

Another suitable barnaclecide is SELEKTOPE (also known as medetomidine or 4-[1-(2,3-dimethylphenyl)ethyl]-1*H*-imidazole), which may be used in such an amount that the proportion thereof in the solid contents of the coating composition is from 0.05 to 0.5 wt%. SELEKTOPE is commercially available from I-Tech AB.

The antifoulant agents are used in such an amount that the proportion thereof in the solid contents of the coating composition is usually from 0.01 to 90 wt%, such as from 0.05 to 80 wt%, for example from 0.5 to 60 wt%. Too small antifoulant agent amounts do not produce an antifouling effect, while too large antifoulant agent amounts result in the formation of a coating film which is apt to develop defects such as cracking and peeling and thus becomes less effective in antifouling property.

The coating composition may comprise one or more primary antifoulant agents such as cuprous oxide (Cu₂O), copper thiocyanate (CuSCN), ECONEA and/or SELEKTOPE.

The coating composition may comprise one or more antifoulant agents such as cuprous oxide and/or copper thiocyanate used in such an amount that the proportion thereof in the solid contents of the coating composition is from 5 to 50 wt%, such as from 7 to 30 wt%, for example from 10 to 20 wt%.

The coating composition may comprise the antifoulant agent ECONEA used in such an amount that the proportion thereof in the solid contents of the coating composition is from 0.5 to 5 wt%, such as from 1 to 4 wt%.

The coating composition may additionally comprise one or more organic co-antifoulant agents dichlofluaninde, tolylfluanide, zinc pyrithione, copper pyrithione, zineb, Irgarol 1051 and/or Sea-nine (with DCOIT as active). Such an organic co-antifoulant agent may be used in such an amount that the proportion thereof in the solid contents of the coating composition is from 0.5 to 5 wt%, for example from 1 to 4 wt%. The addition of an organic co-antifioulant agent is believed to enhance the performance of the primary antifoulant agent.

The present inventors have surprisingly found that the amount of biocide (for example antifoulant agent) useful in the coating compositions of the present invention may be significantly less than that used in other known coating compositions having similar service life times. This offers advantages in use of lower costs associated with manufacturing the compositions and also is good for the environment in terms of using less biocide.

The coating composition may comprise one or more co-binders in addition to the binder as discussed herein. Any suitable co-binder may be included on the coating composition, such as rosin or a metal resinate (for example a metal resinate, such as zinc resinate, copper resinate, calcium resinate or magnesium resinate).

The coating composition may contain other components such as solvents, pigments, thixotropic agents, fillers etc.

Any suitable solvent(s) may be used. The solvent may be an organic solvent, such as xylene, toluene, ketones (for example methyl isobutyl ketone (MIBK), methyl amyl ketone (MAK), methyl isamyl ketone (MIAK)), high boiling aromatic solvents, ethyl acetate and butyl acetate, for example.

Any suitable pigment(s) may be used. Suitable pigments may be one or more of iron (III) oxide, titanium dioxide, zinc oxide and/or carbon black for example.

Any suitable thixotropic agent(s) may be used. Suitable thixotropic agents may be one or more of Crayvallac®-types, castor oil derivatives, bentonites and/or Disparlon-type agents for example.

Any suitable filler(s) may be used. Suitable fillers may be one ore more of calcium carbonate, barium sulphate, talcum, quartz and/or silicas etc.

According to a second aspect of the present invention, there is provided the use of a copolymer comprising (i) units of A and (ii) units of B and/or C: 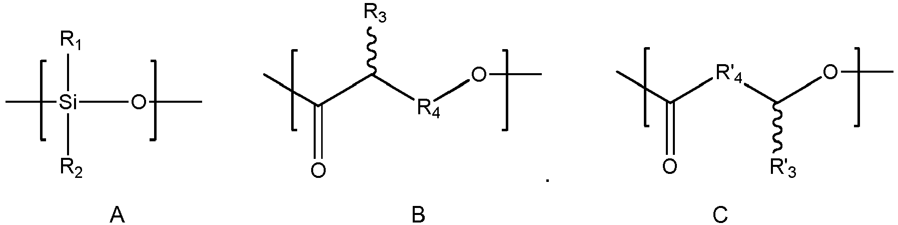 wherein R₁ and R₂ are each independently H, a C₁-C₆ alkyl group or phenyl, R₃ is H, a C₁-C₆ alkyl group or phenyl, R₄ is optional and, when present, is a C₁₋₃ alkylene group, R'₃ is H, a C₁-C₆ alkyl group or phenyl, and R'₄ is optional and, when present, is a C₁₋₃ alkylene group, and wherein the copolymer has a weight ratio of units of B to units of A of from 67:33 to 94:6, preferably of from 80:20 to 92:8 or has a weight ratio of units of C to units of A of from 67:33 to 94:6, preferably of from 80:20 to 92:8, as a binder in a self polishing and/or antifouling coating composition.

In one embodiment according to a second aspect of the present invention, there is provided the use of a copolymer comprising units of A and C: 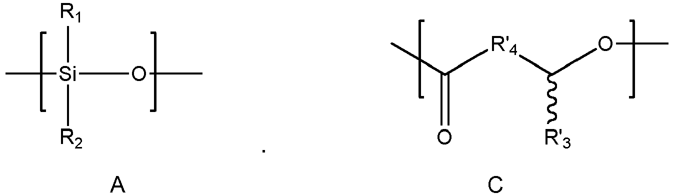 wherein R₁ and R₂ are each independently H, a C₁-C₆ alkyl group or phenyl, R'₃ is H, a C₁-C₆ alkyl group or phenyl, and R'₄ is optional and, when present, is a C₁₋₃ alkylene group, as a binder in a self polishing and/or antifouling coating composition.

In one embodiment according to a second aspect of the present invention, there is provided the use of a copolymer comprising units of A and B: 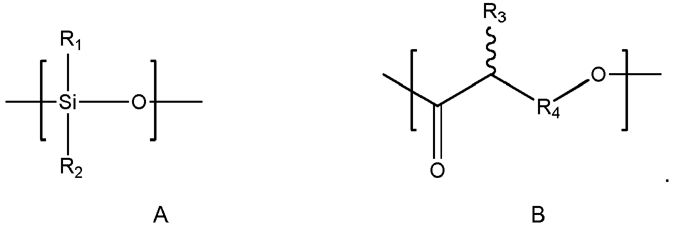 wherein R₁ and R₂ are each independently H, a C₁-C₆ alkyl group or phenyl, R₃ is H, a C₁-C₆ alkyl group or phenyl, and R₄ is optional and, when present, is a C₁₋₃ alkylene group, as a binder in a self polishing and/or antifouling coating composition

In one embodiment according to a second aspect of the present invention, there is provided the use of a copolymer comprising (i) units of A and (ii) units of B and C: 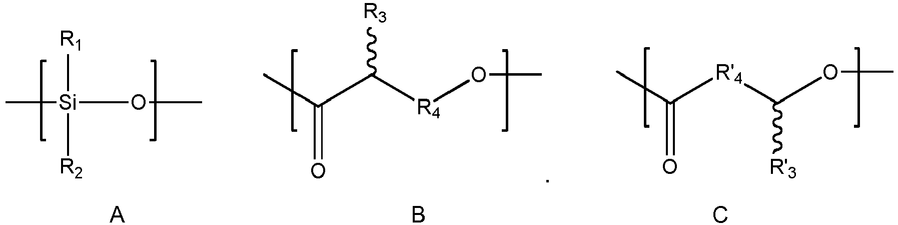 wherein R₁ and R₂ are each independently H, a C₁-C₆ alkyl group or phenyl, R₃ is H, a C₁-C₆ alkyl group or phenyl, R₄ is optional and, when present, is a C₁₋₃ alkylene group, R'₃ is H, a C₁-C₆ alkyl group or phenyl, and R'₄ is optional and, when present, is a C₁₋₃ alkylene group, as a binder in a self polishing and/or antifouling coating composition.

The copolymer for use in the second aspect of the present invention typically is as defined above, for example with reference to the first aspect of the invention.

According to a third aspect of the present invention, there is provided the use of a binder in a marine self polishing and/or antifouling coating composition, wherein the binder comprises a copolymer comprising (i) units of A and (ii) units of B and/or C: 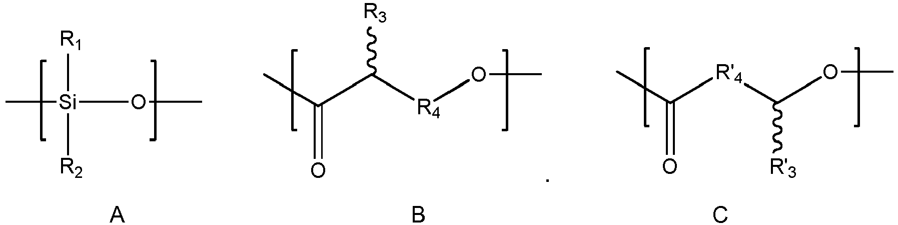 wherein R₁ and R₂ are each independently H, a C₁-C₆ alkyl group or phenyl, R₃ is H, a C₁-C₆ alkyl group or phenyl, R₄ is optional and, when present, is a C₁₋₃ alkylene group, R'₃ is H, a C₁-C₆ alkyl group or phenyl, and R'₄ is optional and, when present, is a C₁₋₃ alkylene group and wherein the copolymer has a weight ratio of units of B to units of A of from 67:33 to 94:6, preferably of from 80:20 to 92:8 or has a weight ratio of units of C to units of A of from 67:33 to 94:6, preferably of from 80:20 to 92:8.

The binder for use in the third aspect of the present invention typically is as defined above, for example with reference to the first aspect of the invention.

According to a fourth aspect of the present invention, there is provided a method of reducing and/or preventing the adhesion of marine organisms on at least a portion of a surface, the method comprising the steps of applying a coating composition according to the first aspect of the present invention to at least a portion of the surface.

According to a fifth aspect of the present invention, there is provided the use of a coating composition according to the first aspect of the present invention in reducing and/or preventing the adhesion of marine organisms on at least a portion of a surface to which the coating composition is applied.

The coating composition of the present invention acts to reduce and/or prevent the adhesion of marine organisms on at least a portion of a surface to which the coating composition is applied by acting as an antifouling composition, i.e. wherein a biocide (for example antifoulant agent) in the composition poisons the organisms attached to the portion of the surface. The coating composition of the present invention also acts as a self polishing composition, i.e. by slowly degrading over time. The degradation is believed to be caused by slow hydrolysation of the binder within the coating. In particular, the units B and/or blocks B' (and/or the units C and/or blocks C') of the binder may hydrolyse so as to cause degradation.

According to an sixth aspect of the present invention, there is provided a marine vessel or marine structure coated on at least a portion thereof with a coating composition according to the first aspect of the present invention.

The present invention also extends to a marine vessel or marine structure coated with a coating composition according to the above aspects of the present invention.

All of the features contained herein may be combined with any of the above aspects and in any combination.

The invention will be further discussed with reference to the following non-limiting Examples.

### Examples

### Examples 1 to 3 Laboratory synthesis of tri-block copolymers by ring opening polymerisation with tin di(2-ethylhexylhexanoate)

Examples 1 to 3 were conducted using the reagents and quantities set out below in Table 1.

The reaction was conducted in a three-necked reaction vessel of 100 mL, equipped with a magnetic stirrer bar, a cooler with bubbler and an inlet for dry nitrogen gas.

3,6-dimethyl-1,4-dioxane-2,5-dione, Tegomer® H-Si (i.e. bishydroxy terminated polydimethylsiloxane, available commercially and purchased from Evonik) and tin octanoate (also referred to as di(2-ethylhexanoate)) were added to toluene in the amounts shown in Table 1. The reaction mixture was then de-aerated under a constant stream of nitrogen and cooled with an ice bath for 30 minutes. The reaction mixture was then stirred and heated to 120°C for 24 hours. Then the toluene was removed by rotational evaporation. The residue was dissolved in tetrahydrofuran (10 ml). The polymer was precipitated by addition of sufficient cold petroleum ether, filtered and dried to yield a white powder.

Prior to formulation as coating compositions, the white powder product for each of Examples 1 to 3 was dissolved in xylene (see Table 1 below for amounts of xylene).

### Example 4 Large Scale synthesis of tri-block copolymer by ring opening polymerisation with tin di(2-ethylhexylhexanoate)

Example 4 was conducted using the reagents and quantities set out below in Table 1.

Tegomer H Si 2311 (128g, 0.0009 mol), tin(II)2-ethylhexanoate (3.9g, 0.0001 mol), 3,6-dimethyl-1,4-dioxane-2,5-dione (1174g, 0.13 mol) and toluene (695g) were added to a 2-liter, 4-necked flask equipped with a motor driven stainless steel stir blade, a water-cooled condenser, a nitrogen inlet, and a heating mantle with a thermometer connected through a temperature feedback control device. The contents of the flask were heated to 75°C and held at that temperature for 10 to 12 hours, until all of the monomers had reacted (i.e. so that the practical solids (determined at 110°C) matched with theoretical solids). The temperature was then decreased to room temperature and poured into a can. The resulting PDMS-lactate copolymer was characterized and a sample of it was placed in a 50°C hot room for 4 weeks, and the copolymer remained liquid.

Prior to formulation as coating compositions, the product of Example 4 was added to xylene (see Table 1 below for amount of xylene).

The products were analysed using the following techniques and the results are shown below and in Table 1:

### 1H NMR

Bruker 500 MHz.

Samples were dissolved in deuterated chloroform (CDCl₃).

The NMR 1H values are:
- for the poly(D,L)lactide: 5.2 ppm (O-C*H*<,1H), 1.65 ppm (C*H3*-CH<, 3H).
- for the polydimethylsiloxane unit: 0.06 ppm (C*H3*-Si, 6H).
- for one linker group: 0.55 ppm (Si-C*H*2-CH2-, 2H), 1.4 ppm (Si-CH2-(C*H*2)4-CH2, 8H), 1.55 ppm (-CH2-C*H2*-CH2-O, 2H), 4.05 ppm (-CH2-C*H2*-O-, 2H).

### Gel Permeation Chromatography

Merck pump attached to 2 columns of PLgel of Polymer Laboratories (Mixed-E, 3 µm and Mixed-D, 5 µm).
Eluent solvent: Tetrahydrofuran at 1 mL/min.
Injection of samples: 20 µL of circa 1 mg/L .
Polymer for calibrations was Easical PS-2 from Agilent Technologies

### Infrared

Bruker Tensor 27 with a Harrick MVP 2 series cell

### DSC (for crystallinity)

Mettler Toledo DSC 822
10 mg samples
Heating cycles: 25→ 100 °C at 20 °C/min, cooling to - 100 °C at 20 °C/min, 2 min at - 100 °C and reheating to + 100 °C at 20 °C/min.

**Table 1**

| Example (EG) | EG 1 | EG 2 | EG 3 | EG 4 |
|---|---|---|---|---|
| reactor size (L) | 0.1 | 0.1 | 0.1 | 2.0 |
| Toluene (g) | 35.0 | 35.0 | 35.0 | 695 |
| 3,6-dimethyl-1,4-dioxane-2,5-dione (g) | 3.2 | 3.7 | 4.3 | 1174 |
| Tegomer H-Si (g) | 3.4 | 2.0 | 0.5 | 128 |
| tin (II)octanoate (g) | 1.2 | 0.7 | 0.2 | 3.9 |
| | | | | |
| yield (g) | 7.2 | 6.0 | 4.5 | n/a |
| addition xylene at 50 wt% | 7.2 | 6.0 | 4.5 | 600 |
| total 50 wt% binder solution | 14.4 | 12.0 | 9.0 | n/a |

| **Polymer Characterisation** | | | | |
|---|---|---|---|---|
| Mn theoretical (kD) | 4.5 | 6.6 | 20.3 | 20 |
| Mn measured by gas permeation chromatography (kD) | 7.3 | 9.4 | 22.4 | 20 |
| Mn measured by 1H NMR (kD) | 4.3 | 6.9 | 18.1 | n/a |
| Mw/Mn | 1.4 | 1.4 | 1.3 | n/a |
| Theoretical molar ratio polylactide/polysiloxane | 1.0 | 2.0 | 9.0 | 9.0 |
| molar ratio polylactide/polysiloxane by 1H NMR after synthesis | 0.89 | 2.1 | 7.3 | n/a |

| **physical properties after 250 days immersion in fresh water** | | | | |
|---|---|---|---|---|
| % Decrease of Mn | n/a | 37.0 | 34.0 | n/a |
| water contact angle fresh (°) | n/a | n/a | 98 | n/a |
| water contact angle after 250 days (°) | n/a | n/a | 92# | n/a |

| | | | | |
|---|---|---|---|---|
| #varies in time n/a = not available | | | | |

The copolymers were obtained with a good control on the molecular weight and on the molecular ratio.

### Examples 5 to 8

Coating compositions were prepared by addition of the binders of Examples 2 to 4 to other components as listed in Table 2 below, under high speed dispersing at 1500 rpm for 30 minutes. For further study, the coating compositions were applied to a polycarbonate sheet (laboratory studies) or PVC panels (raft immersion test). The properties of the coating compositions were then studied as follows:
The water absorption of immersed paint films was determined by a Karl-Fisher Colorimeter technique. The coating compositions based on the binders of Examples 2 and 3 absorbed 34 to 40 wt% water after 150 days. That level was reached in 150 days for the coating composition based on the binder of Example 3.

The maximum loss of mass weight (Mn) of the binder in the immersed coating compositions is about 26% for the binder of Example 2 and 34% for the binder of Example 3. This shows that the coating compositions comprising binders according to the present invention degrade well in water.

The erosion of the coating compositions was studied in freshwater. The coating composition comprising a binder according to the present invention showed fast, consistent and constant erosion in time (see Table 2).

The coating compositions comprising a binder according to the present invention showed a 40 µm decrease in 280 days. PVC panels were coated with the coating compositions and were static immersed in the harbor of Lorient. The antifouling resistance, erodability and film integrity were judged at regular intervals. For paints on the raft the coating compositions comprising binders according to the present invention showed constant erosion after 7 months, with the coating composition comprising the binder of Example 3 being the fastest. The coating composition with the best erosion also showed the best antifouling performance and stayed fouling free over the whole test period of 7 months in the port of Lorient (Bretagne).

**Table 2**

| Example | Average particle size (µm) | Ranges in wt% | 5 wt% | 6 wt% | 7 wt% | 8 wt% |
|---|---|---|---|---|---|---|
| Binder | | | EG 2 | EG 3 | EG 4 | EG 4 |
| Mn | | (kD) | 6.9 | 18.1 | 18.1 | 16 |
| Binder | | 17-22 | 22.0 | 20.6 | 20.6 | 21.0 |
| TiO2 | 0.2 | 15 - 20 | 20.0 | 18.7 | 18.7 | 9.8 |
| ZnO | 30 | 5 - 10 | 10.0 | 9.4 | 9.4 | 14.7 |
| CaCO3 | 2 | 3 - 5 | 5.0 | 4.7 | 4.7 | 0 |
| Dichlofluanide | - | 1 - 3 | 3.0 | 2.8 | 2.8 | 0 |
| China clay | - | | 0 | 0 | 0 | 14.7 |
| Econea | - | | 0 | 0 | 0 | 3.9 |
| Zinc Pyrithione | - | 1 - 3 | 3.0 | 2.8 | 2.8 | 3.9 |
| CuSCN | 25 | 10 - 15 | 15.0 | 14.1 | 14.1 | 0 |
| Crayvallac | - | 0.5 - 1.5 | 1.0 | 0.9 | 0.9 | 1.0 |
| Toluene | - | | 0 | 0 | 0 | 11.3 |
| Xylene | - | 15 - 30 | 18.0 | 21.0 | 21.0 | 7.0 |
| MIBK | - | 3 - 7 | 3.0 | 5.0 | 5.0 | 8.0 |
| Total (wt%) | | | 100.0 | 100.0 | 100.0 | 100 |
| Total solids | | | 79.0 | 74.0 | 74.0 | 73.7 |
| | | | | | | |
| Color | | | Plum | Grey-white | Grey-white | White |
| Film defects? | | | | | | |
| Paint study | | | Yes | Yes | Yes | Yes |

| In distilled water↓ | | | | | | |
|---|---|---|---|---|---|---|
| Karl Fisher | 35 days | wt%- water | | | | |
| | 50 days | wt%- water | | | | |
| | 180 days | wt%- water | 40 | 34 | | |
| Max Mn loss | 240-360 days | % | 26 | 34 | | |
| Paint erosion | over 280 days | µm | 40 | 40 | | |

| In seawater on raft ↓ | | | | | | |
|---|---|---|---|---|---|---|
| Raft performance | After 7 months | Erosion (relative) | + | ++ | ++ (3 months) | ++ |
| | Efficacy against | Slime/ biofilm | + | ++ | ++ (3 months) | + |
| | Efficacy against | Macro-fouling | + | ++ | ++ (3 months) | + |

| | | | | | | |
|---|---|---|---|---|---|---|
| Remarks: Dispersion time: 30 min at 1500 rpm $erosion stops after 150 days EG = example | | | | | | |

As is clearly shown in Table 2, the self polishing erosion rate is greatly increased by using the coating composition and binder according to the present invention.

Furthermore, the antifouling rate is either maintained or enhanced by using the coating composition and binder according to the present invention.

As can be seen from the above examples, a coating composition and binder according to the present invention is particularly suitable for marine self polishing (erodible) and/or antifouling coatings and offers particular advantages with regard to self polishing rates, resistance to cracking and effective biocidal activity.

Attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings) may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extends to any novel one, or any novel combination, of the features disclosed in this specification (including any accompanying claims, abstract and drawings), or to any novel one, or any novel combination, of the steps of any method or process so disclosed.

As used herein, unless otherwise expressly specified, all numbers such as those expressing values, ranges, amounts or percentages may be read as if prefaced by the word "about", even if the term does not expressly appear. Any numerical range recited herein is intended to include all sub-ranges subsumed therein. Plural encompasses singular and vice versa. When ranges are given, any endpoints of those ranges and/or numbers within those ranges can be combined within the scope of the present invention. Including and like terms means "including but not limited to". Similarly, as used herein, the terms "on", "applied on/over", "formed on/over", "deposited on/over", "overlay" and "provided on/over" mean formed, overlay, deposited, or provided on but not necessarily in contact with the surface. For example, a coating layer "formed over" a substrate does not preclude the presence of one or more other coating layers of the same or different composition located between the formed coating layer and the substrate. Including, for example, and like terms means including but not limited to, for example, but not limited to, and the like.

## Claims

1. A self-polishing and/or antifouling coating composition comprising one or more biocides and a binder, wherein the binder comprises a copolymer comprising (i) units of A and (ii) units of B and/or C: 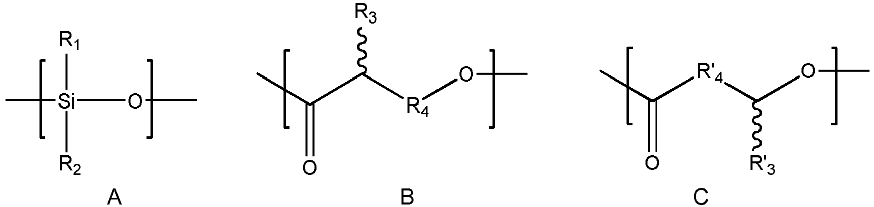 wherein R₁ and R₂ are each independently H, a C₁-C₆ alkyl group or phenyl, R₃ is H, a C₁-C₆ alkyl group or phenyl, R₄ is optional and, when present, is a C₁₋₃ alkylene group, R'₃ is H, a C₁-C₆ alkyl group or phenyl, and R'₄ is optional and, when present, is a C₁₋₃ alkylene group and wherein the copolymer has a weight ratio of units of B to units of A of from 67:33 to 94:6, or has a weight ratio of units of C to units of A of from 67:33 to 94:6.

2. A self polishing and/or antifouling coating composition according to claim 1, wherein the copolymer comprises units of A and B: 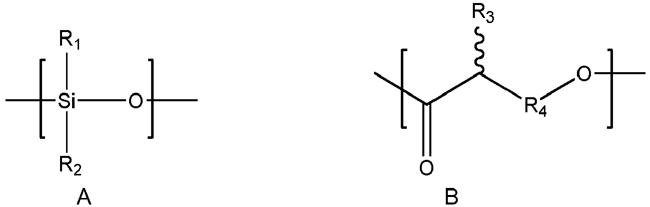 wherein R₁ and R₂ are each independently H, a C₁-C₆ alkyl group or phenyl, R₃ is H, a C₁-C₆ alkyl group or phenyl and R₄ is optional and, when present, is a C₁₋₃alkylene group.

3. A self polishing and/or antifouling coating composition according to claim 2, wherein the copolymer comprises blocks of A and blocks of B, preferably wherein the copolymer is a tri-block copolymer.

4. A self polishing and/or antifouling coating composition according to any of claims 1 to 3, wherein R₁ and R₂ are both methyl.

5. A self polishing and/or antifouling coating composition according to any of claims 1 to 4, wherein R₃ is methyl and R₄ is not present.

6. A self polishing and/or antifouling coating composition according to claim 5 wherein the unit B represents poly(D,L-lactide).

7. A self polishing and/or antifouling coating composition according to any of claims 1 to 4, wherein R₃ is H and R₄ is not present.

8. A self polishing and/or antifouling coating composition according to claim 1, wherein the copolymer consists essentially of units of A and B and/or C, preferably of units of A and B.

9. A self polishing and/or antifouling coating composition according to claim 1, wherein the copolymer has the structure: 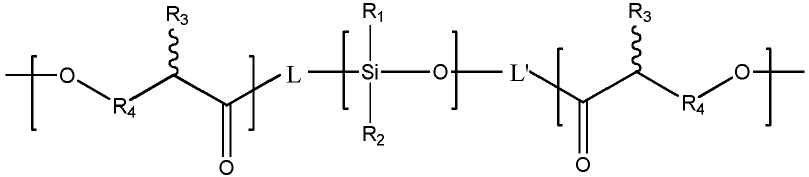 or the structure: 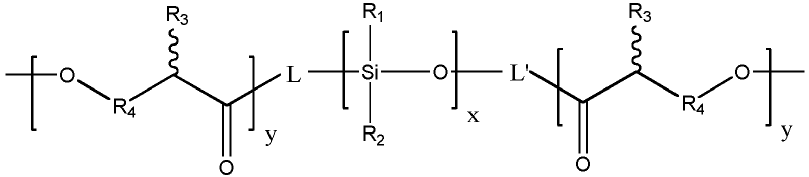 wherein R₁, R₂, R₃ and R₄ are as defined in claim 1, L and L' each independently represent a direct bond or a linker group, wherein when L and/or L' is a linker group, L and/or L' may each independently represent a group -O-(CR₅R₆)ₙ- or -O-(CR₇R₈)ₘ-Si(R₉R₁₀)- wherein R₅ and R₆ are each independently H or a C₁-C₆ alkyl group, n is 1 to 5, R₇ and R₈ are each independently H or a C₁-C₆ alkyl group, m is 1 to 5 and R₉ and R₁₀ are each independently a C₁-C₆ alkyl group, and x and y are each greater than 10, preferably x and y each independently represent an integer of from 10 to 500.

10. A method of reducing and/or preventing the adhesion of marine organisms on at least a portion of a surface, the method comprising the steps of applying a coating composition according to any of claims 1 to 9 to at least a portion of the surface.

11. Use of a coating composition according to any of claims 1 to 9 in reducing and/or preventing the adhesion of marine organisms on at least a portion of a surface to which the coating composition is applied.

12. A marine vessel or marine structure coated on at least a portion thereof with a coating composition according to any of claims 1 to 9.

13. Use of a copolymer comprising (i) units of A and (ii) units of B and/or C: 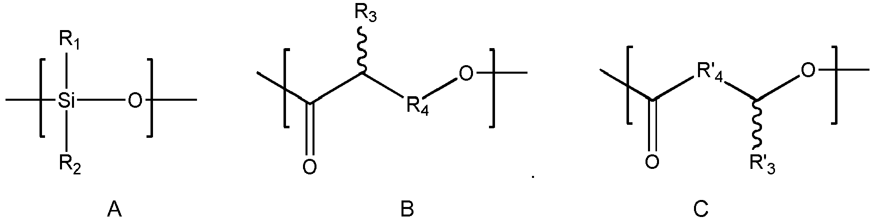 wherein R₁ and R₂ are each independently H, a C₁-C₆ alkyl group or phenyl, R₃ is H, a C₁-C₆ alkyl group or phenyl, R₄ is optional and, when present, is a C₁₋₃ alkylene group, R'₃ is H, a C₁-C₆ alkyl group or phenyl, and R'₄ is optional and, when present, is a C₁₋₃ alkylene group, and wherein the copolymer has a weight ratio of units of B to units of A of from 67:33 to 94:6, or has a weight ratio of units of C to units of A of from 67:33 to 94:6, as a binder in a self polishing and/or antifouling coating composition.

14. Use of a binder in a marine self polishing and/or antifouling coating composition, wherein the binder comprises a copolymer comprising (i) units of A and (ii) units of B and/or C: 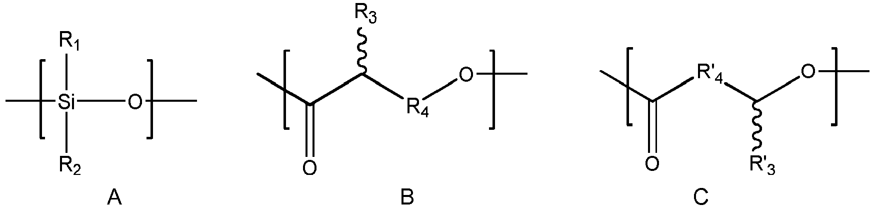 wherein R₁ and R₂ are each independently H, a C₁-C₆ alkyl group or phenyl, R₃ is H, a C₁-C₆ alkyl group or phenyl, R₄ is optional and, when present, is a C₁₋₃ alkylene group, R'₃ is H, a C₁-C₆ alkyl group or phenyl, and R'₄ is optional and, when present, is a C₁₋₃ alkylene group and wherein the copolymer has a weight ratio of units of B to units of A of from 67:33 to 94:6, or has a weight ratio of units of C to units of A of from 67:33 to 94:6.

15. Use according to claim 13 or 14, wherein the copolymer comprises units of A and B: 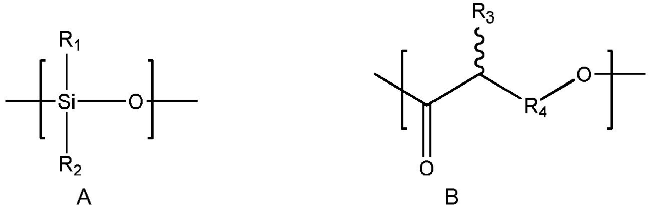 wherein R₁ and R₂ are each independently H, a C₁-C₆ alkyl group or phenyl, R₃ is H, a C₁-C₆ alkyl group or phenyl and R₄ is optional and, when present, is a C₁₋₃ alkylene group.

16. Use according to claim 15, wherein the copolymer comprises blocks of A and blocks of B, preferably wherein the copolymer is a tri-block copolymer.

17. Use according to claim 13 or 14, wherein the copolymer consists essentially of units of A and B and/or C, preferably of units of A and B.

18. Use according to claim 13 or 14, wherein the copolymer has the structure: 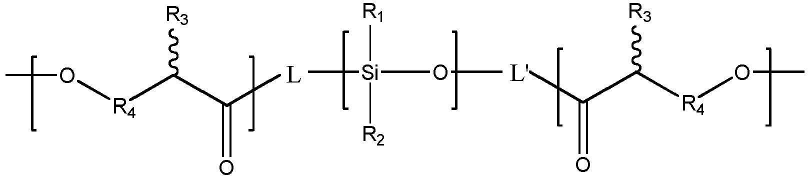 or the structure: 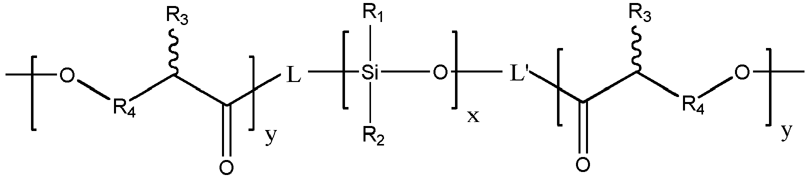 wherein R₁, R₂, R₃ and R₄ are as defined in claim 13 or 14, L and L' each independently represent a direct bond or a linker group, wherein when L and/or L' is a linker group, L and/or L' may each independently represent a group -O-(CR₅R₆)ₙ- or -O-(CR₇R₈)ₘ-Si(R₉R₁₀)- wherein R₅ and R₆ are each independently H or a C₁-C₆ alkyl group, n is 1 to 5, R₇ and R₈ are each independently H or a C₁-C₆ alkyl group, m is 1 to 5 and R₉ and R₁₀ are each independently a C₁-C₆ alkyl group, and x and y are each greater than 10, preferably x and y each independently represent an integer of from 10 to 500.

## Patentansprüche

1. Selbstpolierende und/oder Antifouling-Beschichtungszusammensetzung, umfassend ein oder mehrere Biozide und ein Bindemittel, wobei das Bindemittel ein Copolymer umfasst, umfassend (i) Einheiten von A und (ii) Einheiten von B und/oder C: 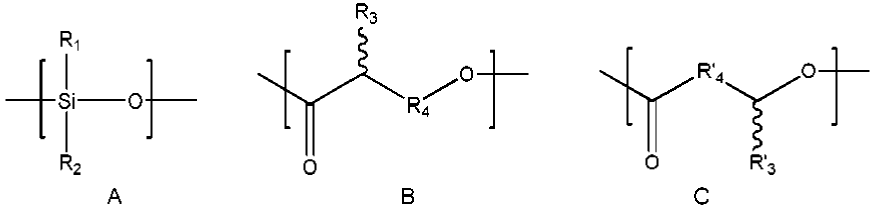 wobei R₁ und R₂ jeweils unabhängig H, eine C₁-C₆-Alkylgruppe oder Phenyl sind, R₃ H, eine C₁-C₆-Alkylgruppe oder Phenyl ist, R₄ optional ist, und, falls vorhanden, eine C₁-C₃-Alkylengruppe ist, R'₃ H, eine C₁-C₆-Alkylgruppe oder Phenyl ist, und R'₄ optional ist, und, falls vorhanden, eine C₁-C₃-Alkylengruppe ist, und wobei das Copolymer ein Gewichtsverhältnis der Einheiten von B zu Einheiten von A von 67:33 bis 94:6 hat, oder ein Gewichtsverhältnis der Einheiten von C zu Einheiten von A von 67:33 bis 94:6 hat.

2. Selbstpolierende und/oder Antifouling-Beschichtungszusammensetzung nach Anspruch 1, wobei das Copolymer Einheiten von A und B umfasst: 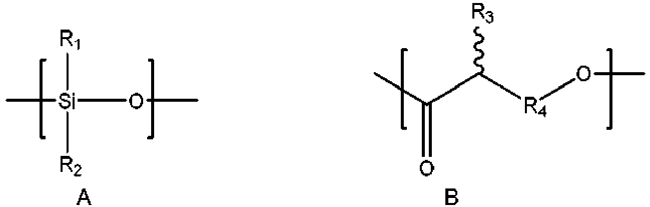 wobei R₁ und R₂ jeweils unabhängig H, eine C₁-C₆-Alkylgruppe oder Phenyl sind, R₃ H, eine C₁-C₆-Alkylgruppe oder Phenyl ist, und R₄ optional ist, und, falls vorhanden, eine C₁-C₃-Alkylengruppe ist.

3. Selbstpolierende und/oder Antifouling-Beschichtungszusammensetzung nach Anspruch 2, wobei das Copolymer Blöcke von A und Blöcke von B umfasst, wobei das Copolymer vorzugsweise ein Triblockcopolymer ist.

4. Selbstpolierende und/oder Antifouling-Beschichtungszusammensetzung nach einem der Ansprüche 1 bis 3, wobei sowohl R₁ als auch R₂ Methyl sind.

5. Selbstpolierende und/oder Antifouling-Beschichtungszusammensetzung nach einem der Ansprüche 1 bis 4, wobei R₃ Methyl ist und R₄ nicht vorhanden ist.

6. Selbstpolierende und/oder Antifouling-Beschichtungszusammensetzung nach Anspruch 5, wobei die Einheit B Poly(D,L-lactid) repräsentiert.

7. Selbstpolierende und/oder Antifouling-Beschichtungszusammensetzung nach einem der Ansprüche 1 bis 4, wobei R₃ H ist und R₄ nicht vorhanden ist.

8. Selbstpolierende und/oder Antifouling-Beschichtungszusammensetzung nach Anspruch 1, wobei das Copolymer im Wesentlichen aus Einheiten von A und B und/oder C besteht, vorzugsweise aus Einheiten von A und B.

9. Selbstpolierende und/oder Antifouling-Beschichtungszusammensetzung nach Anspruch 1, wobei das Copolymer die Struktur 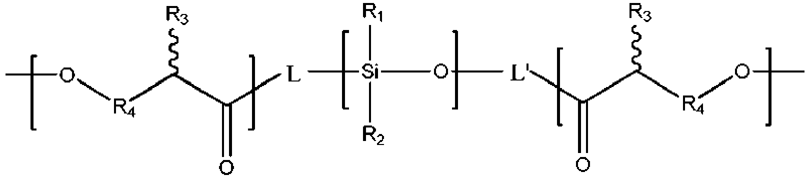 oder die Struktur 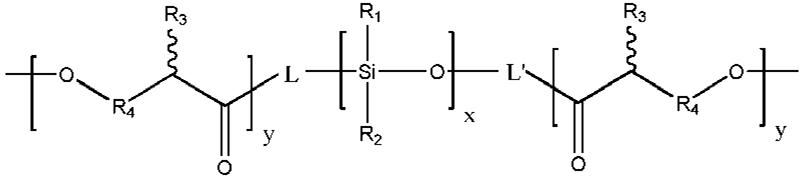 hat, wobei R₁, R₂, R₃ und R₄ wie in Anspruch 1 definiert sind, L und L' jeweils unabhängig eine direkte Bindung oder eine Linkergruppe repräsentieren, wobei, wenn L und/oder L' eine Linkergruppe ist/sind, L und/oder L' jeweils unabhängig eine Gruppe -O-(CR₅R₆)ₙ- oder -O-(CR₇R₈)ₘ-Si(R₉R₁₀)- repräsentieren kann/können, wobei R₅ und R₆ jeweils unabhängig H oder eine C₁-C₆-Alkylgruppe sind, n 1 bis 5 ist, R₇ und R₈ jeweils unabhängig H oder eine C₁-C₆-Alkylgruppe sind, m 1 bis 5 ist, und R₉ und R₁₀ jeweils unabhängig eine C₁-C₆-Alkylgruppe sind, und x und y jeweils größer als 10 sind, vorzugsweise x und y jeweils unabhängig eine ganze Zahl von 10 bis 500 repräsentieren.

10. Mittel zum Reduzieren und/oder Verhindern des Anhaftens von marinen Organismen an mindestens einen Teil einer Oberfläche, wobei das Verfahren die Schritte des Aufbringens einer Beschichtungszusammensetzung nach einem der Ansprüche 1 bis 9 auf mindestens einen Teil der Oberfläche umfasst.

11. Verwendung einer Beschichtungszusammensetzung nach einem der Ansprüche 1 bis 9 zum Reduzieren und/oder Verhindern des Anhaftens von marinen Organismen an mindestens einem Teil einer Oberfläche, worauf die Beschichtungszusammensetzung aufgebracht worden ist.

12. Schiff oder marines Bauwerk, das auf mindestens einem Teil davon mit einer Beschichtungszusammensetzung nach einem der Ansprüche 1 bis 9 beschichtet ist.

13. Verwendung eines Copolymers, umfassend (i) Einheiten von A und (ii) Einheiten von B und/oder C: 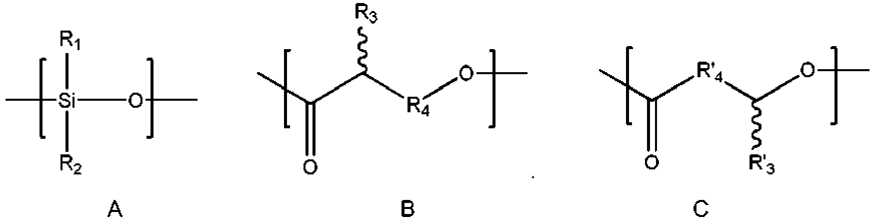 wobei R₁ und R₂ jeweils unabhängig H, eine C₁-C₆ Alkylgruppe oder Phenyl sind, R₃ H, eine C₁-C₆-Alkylgruppe oder Phenyl ist, R₄ optional ist, und, falls vorhanden, eine C₁-C₃-Alkylengruppe ist, R'₃ H, eine C₁-C₆-Alkylgruppe oder Phenyl ist, und R'₄ optional ist, und, falls vorhanden, eine C₁-C₃-Alkylengruppe ist, und wobei das Copolymer ein Gewichtsverhältnis der Einheiten von B zu Einheiten von A von 67:33 bis 94:6 hat, oder ein Gewichtsverhältnis der Einheiten von C zu Einheiten von A von 67:33 bis 94:6 hat, als Bindemittel in einer selbstpolierenden und/oder Antifouling-Beschichtungszusammensetzung.

14. Verwendung eines Bindemittels in einer selbstpolierenden und/oder Antifouling-Beschichtungszusammensetzung für marine Umgebungen, wobei das Bindemittel ein Copolymer umfasst, umfassend (i) Einheiten von A und (ii) Einheiten von B und/oder C: 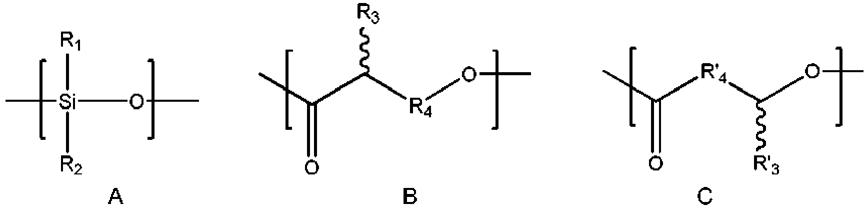 wobei R₁ und R₂ jeweils unabhängig H, eine C₁-C₆-Alkylgruppe oder Phenyl sind, R₃ H, eine C₁-C₆-Alkylgruppe oder Phenyl ist, R₄ optional ist, und, falls vorhanden, eine C₁-C₃-Alkylengruppe ist, R'₃ H, eine C₁-C₆-Alkylgruppe oder Phenyl ist, und R'₄ optional ist, und, falls vorhanden, eine C₁-C₃-Alkylengruppe ist, und wobei das Copolymer ein Gewichtsverhältnis der Einheiten von B zu Einheiten von A von 67:33 bis 94:6 hat, oder ein Gewichtsverhältnis der Einheiten von C zu Einheiten von A von 67:33 bis 94:6 hat.

15. Verwendung nach Anspruch 13 oder 14, wobei das Copolymer Einheiten von A und B umfasst: 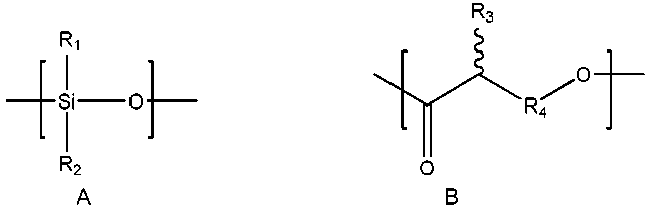 wobei R₁ und R₂ jeweils unabhängig H, eine C₁-C₆-Alkylgruppe oder Phenyl sind, R₃ H, eine C₁-C₆-Alkylgruppe oder Phenyl ist, und R₄ optional ist, und, falls vorhanden, eine C₁-C₃-Alkylengruppe ist.

16. Verwendung nach Anspruch 15, wobei das Copolymer Blöcke von A und Blöcke von B umfasst, wobei das Copolymer vorzugsweise ein Triblockcopolymer ist.

17. Verwendung nach Anspruch 13 oder 14, wobei das Copolymer im Wesentlichen aus Einheiten von A und B und/oder C besteht, vorzugsweise aus Einheiten von A und B.

18. Verwendung nach Anspruch 13 oder 14, wobei das Copolymer die Struktur 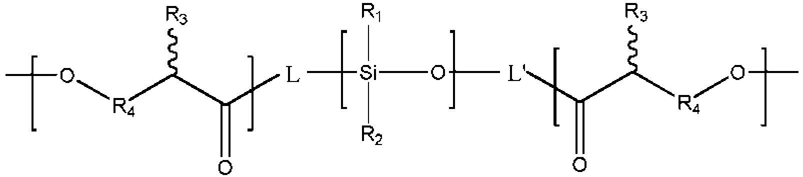 oder die Struktur 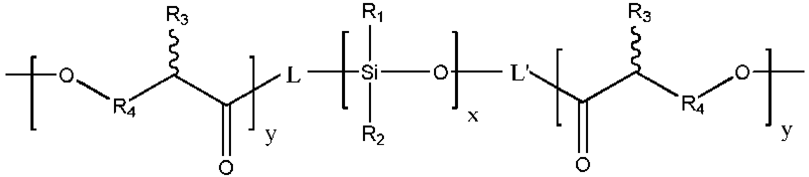 hat, wobei R₁, R₂, R₃ und R₄ wie in Anspruch 13 oder 14 definiert sind, L und L' jeweils unabhängig eine direkte Bindung oder eine Linkergruppe repräsentieren, wobei, wenn L und/oder L' eine Linkergruppe ist/sind, L und/oder L' jeweils unabhängig eine Gruppe -O-(CR₅R₆)ₙ- oder -O-(CR₇R₈)ₘ-Si(R₉R₁₀)- repräsentieren kann/können, wobei R₅ und R₆ jeweils unabhängig H oder eine C₁-C₆-Alkylgruppe sind, n 1 bis 5 ist, R₇ und R₈ jeweils unabhängig H oder eine C₁-C₆-Alkylgruppe sind, m 1 bis 5 ist, und R₉ und R₁₀ jeweils unabhängig eine C₁-C₆-Alkylgruppe sind, und x und y jeweils größer als 10 sind, vorzugsweise x und y jeweils unabhängig eine ganze Zahl von 10 bis 500 repräsentieren.

## Revendications

1. Composition de revêtement autolustrant et/ou antisalissure comprenant un ou plusieurs biocides et un liant, dans laquelle le liant comprend un copolymère comprenant (i) des motifs de A et (ii) des motifs de B et/ou C : 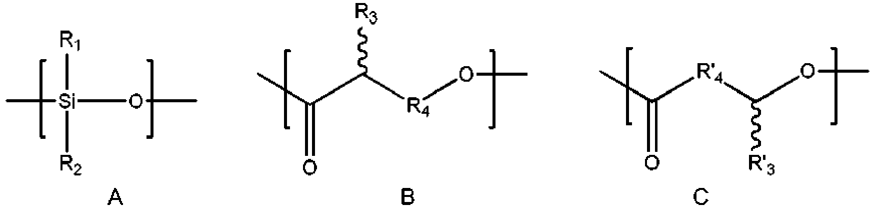 dans laquelle R₁ et R₂ sont chacun indépendamment H, un groupe alkyle en C₁-C₆ ou phényle, R₃ est H, un groupe alkyle en C₁-C₆ ou phényle, R₄ est facultatif et, lorsqu'il est présent, est un groupe alkylène en C₁₋₃, R'₃ est H, un groupe alkyle en C₁-C₆ ou phényle, et R'₄ est facultatif et, lorsqu'il est présent, est un groupe alkylène en C₁₋₃ et dans laquelle le copolymère a un rapport en poids des motifs de B aux motifs de A de 67:33 à 94:6, ou a un rapport en poids des motifs de C aux motifs de A de 67:33 à 94:6.

2. Composition de revêtement autolustrant et/ou antisalissure selon la revendication 1, dans laquelle le copolymère comprend des motifs de A et B : 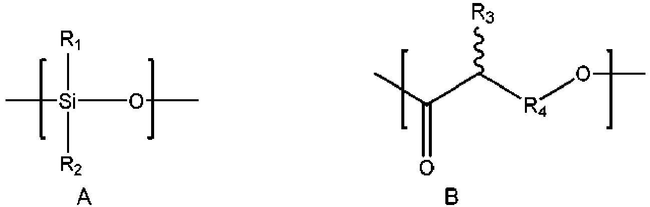 dans laquelle R₁ et R₂ sont chacun indépendamment H, un groupe alkyle en C₁-C₆ ou phényle, R₃ est H, un groupe alkyle en C₁-C₆ ou phényle et R₄ est facultatif et, lorsqu'il est présent, est un groupe alkylène en C₁₋₃.

3. Composition de revêtement autolustrant et/ou antisalissure selon la revendication 2, dans laquelle le copolymère comprend des blocs de A et des blocs de B, de préférence dans laquelle le copolymère est un copolymère tribloc.

4. Composition de revêtement autolustrant et/ou antisalissure selon l'une quelconque des revendications 1 à 3, dans laquelle R₁ et R₂ sont tous deux méthyle.

5. Composition de revêtement autolustrant et/ou antisalissure selon l'une quelconque des revendications 1 à 4, dans laquelle R₃ est méthyle et R₄ n'est pas présent.

6. Composition de revêtement autolustrant et/ou antisalissure selon la revendication 5 dans laquelle le motif B représente un poly(D,L-lactide).

7. Composition de revêtement autolustrant et/ou antisalissure selon l'une quelconque des revendications 1 à 4, dans laquelle R₃ est H et R₄ n'est pas présent.

8. Composition de revêtement autolustrant et/ou antisalissure selon la revendication 1, dans laquelle le copolymère est essentiellement constitué de motifs de A et B et/ou C, de préférence de motifs de A et B.

9. Composition de revêtement autolustrant et/ou antisalissure selon la revendication 1, dans laquelle le copolymère a la structure : 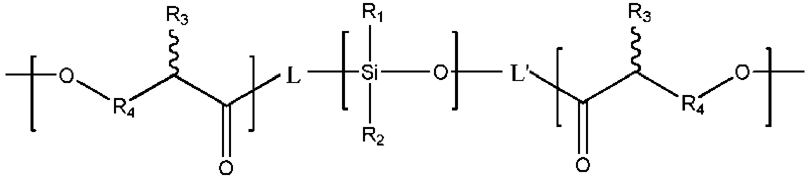 ou la structure : 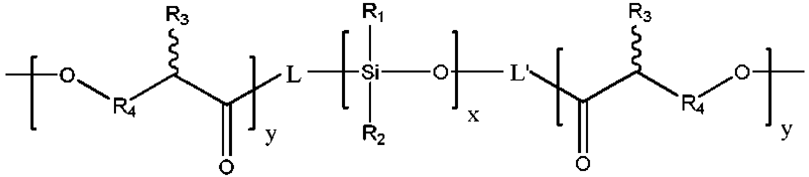 dans laquelle R₁, R₂, R₃ et R₄ sont tels que définis dans la revendication 1, L et L' représentent chacun indépendamment une liaison directe ou un groupe lieur, dans laquelle, lorsque L et/ou L' sont un groupe lieur, L et/ou L' peuvent chacun représenter indépendamment un groupe -O-(CR₅R₆)ₙ- ou -O-(CR₇R₈)ₘ-Si(R₉R₁₀)- où R₅ et R₆ sont chacun indépendamment H ou un groupe alkyle en C₁-C₆, n est 1 à 5, R₇ et R₈ sont chacun indépendamment H ou un groupe alkyle en C₁-C₆, m est 1 à 5 et R₉ et R₁₀ sont chacun indépendamment un groupe alkyle en C₁-C₆, et x et y sont chacun supérieurs à 10, de préférence x et y représentent chacun indépendamment un entier de 10 à 500.

10. Procédé de réduction et/ou prévention de l'adhérence d'organismes marins sur au moins une partie d'une surface, le procédé comprenant les étapes d'application d'une composition de revêtement selon l'une quelconque des revendications 1 à 9 sur au moins une partie de la surface.

11. Utilisation d'une composition de revêtement selon l'une quelconque des revendications 1 à 9 pour réduire et/ou prévenir l'adhérence d'organismes marins sur au moins une partie d'une surface sur laquelle la composition de revêtement est appliquée.

12. Navire marin ou structure marine revêtue sur au moins une partie de celui-ci d'une composition de revêtement selon l'une quelconque des revendications 1 à 9.

13. Utilisation d'un copolymère comprenant (i) des motifs de A et (ii) des motifs de B et/ou C : 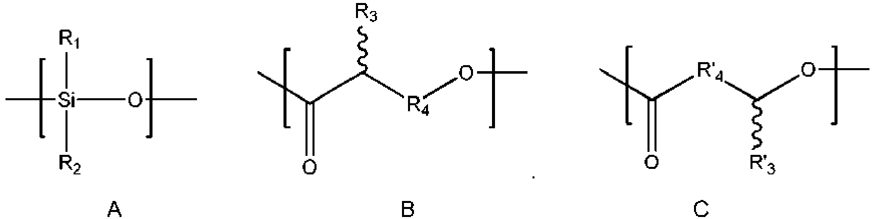 dans laquelle R₁ et R₂ sont chacun indépendamment H, un groupe alkyle en C₁-C₆ ou phényle, R₃ est H, un groupe alkyle en C₁-C₆ ou phényle, R₄ est facultatif et, lorsqu'il est présent, est un groupe alkylène en C₁₋₃, R'₃ est H, un groupe alkyle en C₁-C₆ ou phényle, et R'₄ est facultatif et, lorsqu'il est présent, est un groupe alkylène en C₁₋₃, et dans laquelle le copolymère a un rapport en poids des motifs de B aux motifs de A de 67:33 à 94:6, ou a un rapport en poids des motifs de C aux motifs de A de 67:33 à 94:6, en tant que liant dans une composition de revêtement autolustrant et/ou antisalissure.

14. Utilisation d'un liant dans une composition de revêtement autolustrant et/ou antisalissure de marine, dans laquelle le liant comprend un copolymère comprenant (i) des motifs de A et (ii) des motifs de B et/ou C : 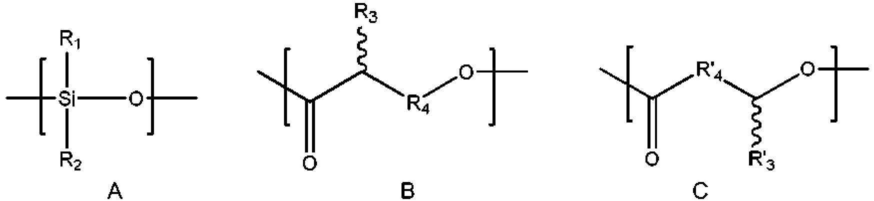 dans laquelle R₁ et R₂ sont chacun indépendamment H, un groupe alkyle en C₁-C₆ ou phényle, R₃ est H, un groupe alkyle en C₁-C₆ ou phényle, R₄ est facultatif et, lorsqu'il est présent, est un groupe alkylène en C₁₋₃, R'₃ est H, un groupe alkyle en C₁-C₆ ou phényle, et R'₄ est facultatif et, lorsqu'il est présent, est un groupe alkylène en C₁₋₃ et dans laquelle le copolymère a un rapport en poids des motifs de B aux motifs de A de 67:33 à 94:6, ou a un rapport en poids des motifs de C aux motifs de A de 67:33 à 94:6.

15. Utilisation selon la revendication 13 ou 14, dans laquelle le copolymère comprend des motifs de A et B : 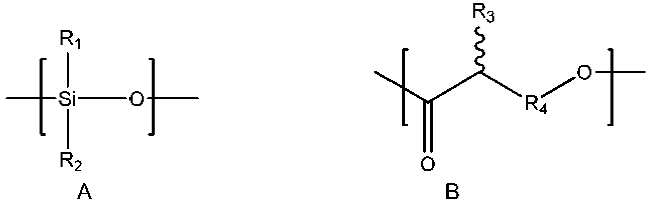 dans laquelle R₁ et R₂ sont chacun indépendamment H, un groupe alkyle en C₁-C₆ ou phényle, R₃ est H, un groupe alkyle en C₁-C₆ ou phényle et R₄ est facultatif et, lorsqu'il est présent, est un groupe alkylène en C₁₋₃.

16. Utilisation selon la revendication 15, dans laquelle le copolymère comprend des blocs de A et des blocs de B, de préférence dans laquelle le copolymère est un copolymère tribloc.

17. Utilisation selon la revendication 13 ou 14, dans laquelle le copolymère est essentiellement constitué de motifs de A et B et/ou C, de préférence de motifs de A et B.

18. Utilisation selon la revendication 13 ou 14, dans laquelle le copolymère a la structure : 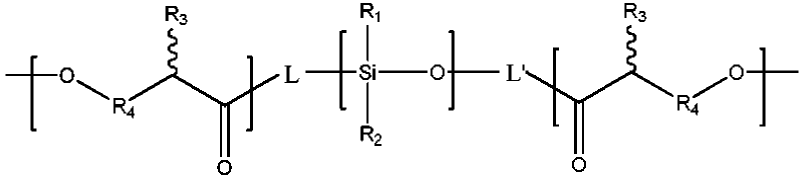 ou la structure : 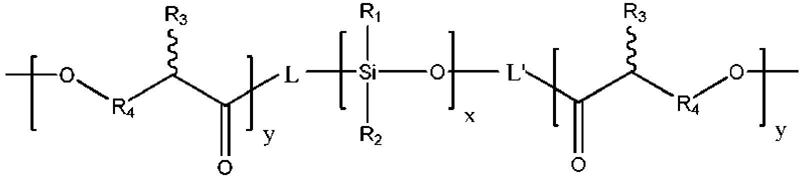 dans laquelle R₁, R₂, R₃ et R₄ sont tels que définis dans la revendication 13 ou 14, L et L' représentent chacun indépendamment une liaison directe ou un groupe lieur, dans lesquelles, lorsque L et/ou L' est un groupe lieur, L et/ou L' peuvent chacun représenter indépendamment un groupe -O-(CR₅R₆)ₙ- ou -O-(CR₇R₈)ₘ-Si(R₉R₁₀)- où R₅ et R₆ sont chacun indépendamment H ou un groupe alkyle en C₁-C₆, n est 1 à 5, R₇ et R₈ sont chacun indépendamment H ou un groupe alkyle en C₁-C₆, m est 1 à 5 et R₉ et R₁₀ sont chacun indépendamment un groupe alkyle en C₁-C₆, et x et y sont chacun supérieurs à 10, de préférence x et y représentent chacun indépendamment un entier de 10 à 500.
